# EUROPEAN PATENT SPECIFICATION

(11) **EP 1 793 861 B1**
(45) Date of publication and mention of the grant of the patent: **17.05.2017**
(21) Application number: 05805726.6
(22) Date of filing: 23.09.2005
(51) Int. Cl.: A61K 47/42, A61K 47/32, A01N 59/16

(54) **AN ANTIMICROBIAL SILVER HALIDE COMPOSITION**
ANTIMIKROBIELLE SILBERHALOGENIDZUSAMMENSETZUNG
COMPOSITION ANTIMICROBIENNE D'HALOGÉNURE D'ARGENT

(30) Priority: 27.09.2004 US 951199
(43) Date of publication of application: 13.06.2007
(73) Proprietor: Thomson Research Associates International Limited, Toronto, ON M5H 3Y2 (CA)
(72) Inventor: SCHROEDER, Kurt, Michael, Spencerport, NY 14559 (US); JAGANNATHAN, Seshadri, Rochester, NY 14618 (US); AYLWARD, Brian, Patrick, Rochester, NY 14626 (US); CHANG, Yun Chea, Rochester, NY 14625 (US); FORNALIK, Mark, Steven, Rochester, NY 14617 (US); LERAT, Yannick, 22620 Ploubazlanec (FR); WALSH, Patricia, A., Williamson, NY 14589 (US); BUDZ, Jerzy, Antoni, Rochester, NY 14450 (US)
(74) Representative: Ellis, Michael James
(86) International application number: PCT/US2005/034473
(87) International publication number: WO 2006/036909

(56) References cited:
- EP-A- 0 774 685
- EP-A- 0 911 297
- WO-A-01/24839
- WO-A-02/070022
- WO-A-02/083156
- US-A- 3 113 910
- US-A- 3 265 638
- US-A- 3 620 752
- US-A- 5 405 644

## Description

### FIELD OF THE INVENTION

The present invention relates to an antimicrobial composition of specific silver salts and polymeric binders. The composition may be used to provide antimicrobial activity to a target fiber or textile fabric.

### BACKGROUND OF THE INVENTION

The antimicrobial properties of silver have been known for several thousand years. The general pharmacological properties of silver are summarized in "Heavy Metals" - by Stewart C. Harvey and "Antiseptics and Disinfectants: Fungicides; Ectoparasiticides" - by Stewart Harvey in The Pharmacological Basis of Therapeutics, Fifth Edition, by Louis S. Goodman and Alfred Gilman (editors), published by MacMillan Publishing Company, NY, 1975. It is now understood that the affinity of silver ion to biologically important moieties such as sulfhydryl, amino, imidazole, carboxyl and phosphate groups are primarily responsible for its antimicrobial activity.

The attachment of silver ions to one of these reactive groups on a protein results in the precipitation and denaturation of the protein. The extent of the reaction is related to the concentration of silver ions. The diffusion of silver ion into mammalian tissues is self-regulated by its intrinsic preference for binding to proteins through the various biologically important moieties on the proteins, as well as precipitation by the chloride ions in the environment. Thus, the very affinity of silver ion to a large number of biologically important chemical moieties (an affinity which is responsible for its action as a germicidal/biocidal/ viricidal/fungicidal/bacteriocidal agent) is also responsible for limiting its systemic action - silver is not easily absorbed by the body. This is a primary reason for the tremendous interest in the use of silver containing species as an antimicrobial i.e. an agent capable of destroying or inhibiting the growth of microorganisms, including bacteria, yeast, fungi and algae, as well as viruses.

In addition to the affinity of silver ions to biologically relevant species, which leads to the denaturation and precipitation of proteins, some silver compounds, those having low ionization or dissolution ability, also function effectively as antiseptics. Distilled water in contact with metallic silver becomes antibacterial even though the dissolved concentration of silver ions is less than 100 ppb. There are numerous mechanistic pathways by which this oligodynamic effect is manifested i.e. by which silver ion interferes with the basic metabolic activities of bacteria at the cellular level, thus leading to a bacteriocidal and/or bacteriostatic effect.

A detailed review of the oligodynamic effect of silver can be found in "Oligodynamic Metals" by I.B. Romans in Disinfection, Sterlization and Reservation, C.A. Lawrence and S.S. Bloek (editors), published by Lea and Fibiger (1968) and "The Oligodynamic Effect of Silver" by A. Goetz, R.L. Tracy and F.S. Harris, Jr. in Silver in Industry, Lawrence Addicks (editor), published by Reinhold Publishing Corporation, 1940. These reviews describe results that demonstrate that silver is effective as an antimicrobial agent towards a wide range of bacteria. However, it is also known that the efficacy of silver as an antimicrobial agent depends critically on the chemical and physical identity of the silver source. The silver source may be silver in the form of metal particles of varying sizes, silver as a sparingly soluble material such as silver chloride, silver as a highly soluble salt such as silver nitrate, etc. The efficiency of the silver also depends on i) the molecular identity of the active species - whether it is Ag⁺ ion or a complex species such as (AgCl₂)⁻, etc., and ii) the mechanism by which the active silver species interacts with the organism, which depends on the type of organism. Mechanisms may include, for example, adsorption to the cell wall which causes tearing; plasmolysis where the silver species penetrates the plasma membrane and binds to it; adsorption followed by the coagulation of the protoplasma; or precipitation of the protoplasmic albumin of the bacterial cell. The antibacterial efficacy of silver is determined, among other factors, by the nature and concentration of the active species; the type of bacteria; the surface area of the bacteria that is available to interaction with the active species; the bacterial concentration; the concentration and/or the surface area of species that could consume the active species and lower its activity; and the mechanisms of deactivation.

It is clear from the literature on the use of silver based materials as antibacterial agents that there is no general procedure for precipitating silver based materials and/or creating formulations of silver based materials that would be suitable for all applications. Since the efficacy of the formulations depends on so many factors, there is a need for i) a systematic process for generating the source of the desired silver species, ii) a systematic process for creating formulations of silver based materials with a defined concentration of the active species; and iii) a systematic process for delivering these formulations for achieving predetermined efficacy. It is particularly a need for processes which are simple and cost effective.

One very important use of silver based antimicrobials is for textiles. Various methods are known in the art to render antimicrobial properties to a target fiber. The approach of embedding inorganic antimicrobial agents, such as zeolites, into low melting components of a conjugated fiber is described in U.S. 4,525,410 and U.S. 5,064,599. In another approach, the antimicrobial agent may be delivered during the process of making a synthetic fiber such as those described in U.S. 5,180,402, U.S. 5,880,044, and U.S. 5,888,526, or via a melt extrusion process as described in U.S. 6,479,144 and U.S. 6,585,843. In still yet another process an antimicrobial metal ion may be ion exchanged with an ion exchange fiber as described in U.S. 5,496,860.

Methods of transferring an antimicrobial agent, in the form of an inorganic metal salt or zeolite, from one substrate to a fabric are disclosed in U.S. 6,461,386. High-pressure laminates containing antimocrobial inorganic metal compounds are disclosed in U.S. 6,248,342. Deposition of antimicrobial metals or metal-containing compounds onto a resin film or target fiber has also been described in U.S. 6, 274,519 and U.S. 6,436,420.

It is also known in the art that fibers may be rendered with antimicrobial properties by applying a coating of silver particles. Silver ionexchange compounds, silver zeolites and silver glasses are all known to be applied to fibers through topical applications for the purpose of providing antimicrobial properties to the fiber as described in U.S. 6,499,320, U.S. 6,584,668, U.S. 6,640,371 and U.S. 6,641,829. Other inorganic antimicrobial agents may be contained in a coating that is applied to a fiber as described in U.S. 5,709870, U.S. 6,296,863, U.S. 6,585,767 and U.S 6,602,811.

It is known in the art to use binders to apply coating compositions to impart antimicrobial properties to various substrates. U.S. 6,716,895 describes the use of hydrophilic and hydrophobic polymers and a mixture of oligodynamic metal salts as an antimicrobial composition, wherein the water content in the coating composition is preferably less than 50%. The mixture of oligodynamic metal salts are intended to span a wide range of solubilities and would not be useful in a durable coating application. U.S. 5,709,870 describes the use of carboxymethyl cellulose-silver complexes to provide an antimicrobial coating to a fiber. The use of silver halides in an antimicrobial coating, particularly for medical devices, is described in U.S. 5,848,995.

In particular, the prior art has disclosed formulations that are useful for highly soluble silver salts having solubility products, herein referred to as pKsp, of less than 1. Generally, these silver salts require the use of hydrophobic addenda to provide the desired combinations of antimicrobial behavior and durability. Conversely, it is also know that very insoluble metallic silver particles, having a pKsp greater than 15 would require hydrophilic addenda to provide the desired combinations of antimicrobial behavior and durability. There exists a need to provide formulations of sparingly soluble silver salts, in the range of pKsp from about 8-12, that can be highly efficient in antimicrobial behavior and durability when applied to a fiber or textile fabric.

It is well known in the photographic art that gelatin is a useful hydrophilic polymer in the production of photographic silver halide emulsions. Gelatin is present during the precipitation of, for example, silver chloride from its precursor salts. For most practical photographic coating formulations the amount of gelatin is above 3% during the precipitation stages and preferably above 10% during the coating applications for film or paper products. It is a desirable feature that the gelatin is present in an amount sufficient to solidify or gel the composition. This is desired to minimize settling of the dense silver halide particles. The high gelatin levels are themselves a source of bio-activity and it is common practice to add biostats or biocides to minimize or prevent spoilage of the photographic emulsion prior to the coating application.

EP-A-0911297 describes a water treatment pellet for inserting into an inline feeder in a water supply in which a zinc pellet is coated with silver chloride using a cured water-porous adhesive matrix, which is preferably a cured cross-linked gelatin. WO-A-02/083156 describes an antimicrobial coating for implantable medical devices, in particular HDPE tubing, the coating including a blend of silver chloride with PEA and PVP.

Although the approaches in the prior art for rendering antimicrobial properties to a fiber through the use of an inorganic metal compounds may be viable, there remains the need to deliver a cost effective source of inorganic metal compounds that is easy to apply to the target fiber and which is durable and efficient in its antimicrobial behavior.

### SUMMARY OF THE INVENTION

This invention provides use of a composition comprising silver halide particles, gelatin in an amount of less than 1% by weight and at least 50% water, which composition is substantially free of organic solvents to impart antimicrobial properties to a textile or fabric

This invention also provides a method of coating a textile fabric or textile fiber to impart antimicrobial properties thereto, the method comprising providing a composition as defined above which further comprises a hydrophobic binder or a crosslinker for the gelatin and coating the composition on the textile fabric or textile fiber. Preferably, in the method the composition comprises at least two separately packaged parts, the first part being a composition as defined above; and the second part being a composition comprising an aqueous suspension of a hydrophobic binder, or a composition comprising a crosslinker for the gelatin; and mixing the two separately packaged parts;.
This invention also provides a fabric or textile fiber having coated thereon an antimicrobial composition comprising silver chloride particles and gelatin obtained from the above method.

The compositions used in the invention impart durable antimicrobial properties to yarn, fabrics or textiles. The silver halide particles are applied to the target fiber or textile fabric with the aid of a hydrophilic binder that imparts colloidal stability to the particles prior to and during the application process to the fiber or textile fabric. The composition may also be aided with the use of a hydrophobic binder to impart improved durability to extended washing cycles that would otherwise remove the particles and the associated antimicrobial properties of the fiber or textile fabric.

### DESCRIPTION OF THE INVENTION

The composition used in the invention is a composition comprising at least 50 % water, silver halide particles, and a hydrophilic polymer, which is gelatin. The hydrophilic polymer is of a type and used in an amount wherein the composition does not substantially gel or solidify at 25 degrees C. In practical terms the composition, when sold as a concentrate, must be able to flow at 25 degrees C and be easily mixed with an aqueous diluent or other addenda prior to use as an antimicrobial coating for yarn or textile. The composition also encompasses a more diluted form that is suitable for dip, pad, or other types of coating. The composition is substantially free of organic solvents. Preferably, no organic solvent is intentionally added to the composition. The composition must exhibit antimicrobial activity upon drying.

In its concentrated form the composition must comprise at least 50 % water by weight. In one embodiment it comprises at least 70 % water by weight. In its diluted form the composition may be greater than 95 % water.

The silver halide particles may be of any shape and halide composition. The type of halide may include chloride, bromide, iodide and mixtures of them. The silver halide particles may be, for example, silver bromide, silver iodobromide, bromoiodide, silver iodide or silver chloride. In one embodiment the silver halide particles are predominantly silver chloride. The predominantly silver chloride particles may be, for example, silver chloride, silver bromochloride, silver iodochloride, silver bromoiodochloride and silver iodobromochloride particles. By predominantly silver chloride, it is meant that the particles are greater than about 50 mole percent silver chloride. Preferably, they are greater than about 90 mole percent silver chloride; and optimally greater than about 95 mole percent silver chloride. The silver halide particles may either be homogeneous in composition or the core region may have a different composition than the shell region of the particles. The shape of the silver halide particles may be cubic, octahedral, tabular or irregular. More silver halide properties may be found in "The Theory of the Photographic Process", T. H. James, ed., 4th Edition, Macmillan (1977). In one embodiment the silver halide particles have a mean equivalent circular diameter of less than 1 micron, and preferably less 0.5 microns.

The solubility of silver halide, hence the free silver ion concentration, is determined by Ksp, particle size, structure and shape of the particle. While not being held to the theory, it is believed that the free silver ion concentration plays a role in antimicrobial efficacy. By controlling the above variables one can control silver ion release rate and antimicrobial activity.

The silver halide particles and associated coating composition of the present invention are applied to the fiber or fabric in an amount sufficient to provide antimicrobial properties to the treated fiber for a minimum of at least 10 washes, more preferably 20 washes and most preferably after 30 washes in accordance with ISO 6330:2003. The amount of silver halide particles applied to the target fiber or textile fabric is determined by the desired durability or length of time of antimicrobial properties. The amount of silver halide particles present in the composition will depend on whether the composition is one being sold in a concentrated form suitable for dilution prior to coating or whether the composition has already been diluted for coating. Typical levels of silver salt particles (by weight percent) in the formulation are preferably from about 0.000001% to about 10%, more preferably from about 0.0001% to about 1% and most preferably from about 0.001% to 0.5%. In a concentrated format the composition preferably comprises silver halide particles in an amount of 0.001 to 10%, more preferably 0.001 to 1 %, and most preferably 0.001 to 0.5 %. In a diluted format the composition preferably comprises silver halide particles in an amount from about 0.000001% to about 0.01%, more preferably from about 0.00001% to about 0.01% and most preferably from about 0.0001% to 0.01%. It is a desirable feature of the invention to provide efficient antimicrobial properties to the target fiber or textile fabric at a minimum silver halide level to minimize the cost associated with the antimicrobial treatment.

The preferred hydrophilic polymers of the present invention are soluble in water at concentrations greater than about at least 2%, preferably greater than 5 %, and more preferably greater than 10 %. Therefore, suitable hydrophilic polymers do not require an organic solvent to remain fluid at 25 degrees C. Suitable hydrophilic polymers useful in the invention include, for example, gelatin, polyacrylic acid, polyacrylamide, polyvinyl alcohol, polyvinylpyrrolidones, cellulose etc. into the reaction vessel. The polymers peptize or stabilize silver halide particles to help maintain colloidal stability of the solution. The hydrophilic polymer is gelatin.

Gelatin is an amphoteric polyelectrolyte that has excellent affinity to a number of substrates. The gelatin of the present invention may be processed by any of the well-known techniques in the art including; alkali- treatment, acid-treatment, acetylated gelatin, phthalated gelatin or enzyme digestion. The gelatin may have a wide range of molecular weights and may include low molecular weight gelatins if it is desirable to raise the concentration of the gelatin in the inventive composition without solidifying the composition. The gelatin in the present invention is added in an amount sufficient to peptize the surface of the silver halide and some excess of gelatin will always be present in the water phase. The gelatin level may be chosen such that the composition does not substantially solidify or gel. In one embodiment the weight percentage of gelatin is less than 3 %, preferably less than 2 %, and more preferably less than 1%. The gelatin of the present invention may also be cross-linked in order to improve the durability of the coating composition containing the antimicrobial silver halide particles.

In a preferred embodiment the silver halide particles may be formed by reacting silver nitrate with halide in aqueous solution. In the process of silver halide precipitation one can add the hydrophilic polymers to peptize the surface of the silver halide particles thereby imparting colloidal stability to the particles, see for example, Research Disclosure September 1997, Number 401 published by Kenneth Mason Publications, Ltd., Dudley Annex, 12a North Street, Emsworth, Hampshire PO10 7DQ, ENGLAND, the contents of which are incorporated herein by reference.

In addition to the hydrophilic binder, a hydrophobic binder resin is preferably used to improve the adhesion and durability of the silver salt particles once applied to the fabric surface. Such hydrophobic binders are well known in the art and are typically provided as aqueous suspensions of polymer microparticles. Materials suitable for use as hydrophobic binders include acrylic, styrene-butadiene, polyurethane, polyester, polyvinyl acetate, polyvinyl acetal, vinyl chloride and vinylidine chloride polymers, including copolymers thereof. Acrylic polymers and polyurethane are preferred.

The hydrophobic binders should have film-forming properties that include a range of glass transition temperatures from about -30 C to about 90 C. The hydrophobic binder particles may have a wide range of particle sizes from about 10 nm to about 10,000 nm and can be polydisperse in distribution. The hydrophobic binders may also be thermally or chemically crosslinkable in order to modify the desired durability properties of the antimicrobial fiber or fabric textile. The hydrophobic binders may be nonionic or anionic in nature. Useful ranges of the hydrophobic binders are generally less than about 10% of the composition. It is understood that the choice of the hydrophobic binder may be related to specific end use requirements of the fiber or fabric textile including, wash resistance, abrasion (crock), tear resistance, light resistance, coloration, hand and the like. As described in more detail below the hydrophobic binder is generally kept separate from the hydrophilic polymer/silver halide particle composition until a short time prior to coating.

As noted above, the composition may also comprise a crosslinker for the gelatin. The crosslinker is also generally kept separate from the hydrophilic polymer/silver halide particle composition until a short time prior to coating. Examples of compounds useful in crosslinking the gelatin include, but are not limited to, Alum, formaldehyde and free dialdehydes such as glutaraldehyde, bis(imniomethyl)ether salts, s-trazines and diazines, such as dihydroxychlorotriazine, epoxides, aziridines, and the like.

The composition comprising silver salt particles, hydrophilic binder and optionally, hydrophobic binder or gelatin cross-linker, can be applied to the target fiber or textile fabric in any of the well know methods in art including, pad coating, knife coating, screen coating, spraying , foaming and kiss-coating. The components of the inventive composition are preferably delivered as a separately packaged two-part system involving colloidal silver halide particles and hydrophilic binder as one part and a second part comprising an aqueous suspension of a hydrophobic binder, or gelatin cross-linker and, optionally, a second hydrophilic binder that may be the same or different as the hydrophilic binder from part A. The first part, comprising colloidal silver halide particles and hydrophilic binder, is excellent in shelf-life without compromising colloidal stability. The two parts may be combined prior to a padding or coating operation and exhibit colloidal stability for the useful shelf-life of the composition, typically on the order of several days.

There may also be present optional components, for example, thickeners or wetting agents to aid in the application of the inventive composition to the target fiber or textile fabric. Examples of wetting materials include surface active agents commonly used in the art such as ethyleneoxide-propyleneoxide block copolymers, polyoxyethylene alkyl phenols, polyoxyethylene alkyl ethers, and the like. Compounds useful as thickeners include, for example, particulates such as silica gels and smectite clays, polysaccharides such as xanthan gum, polymeric materials such as acrylic-acrylicacid copolymers, hydrophobically modified ethoxylated urethanes, hydrophobically modified nonionic polyols, hydroxypropyl methylcellulose and the like.

Also of use in the compositions is an agent to prevent latent image formation. Some silver salts are light sensitive and discolor upon irradiation of light. However, the degree of light sensitivity may be minimized by several techniques known to those who are skilled in the art. For example, storage of the silver halide particles in a low pH environment will minimize discoloration. In general, pH below 7.0 is desired and more specifically, pH below 4.5 is preferred. Another technique to inhibit discoloration involves adding compounds of elements, such as, iron, iridium, rhuthinium, palladium, osmium, gallium, cobalt, rhodium, and the like, to the silver halide particles. These compounds are known in the photographic art to change the propensity of latent image formation; and thus the discoloration of the silver salt. Additional emulsion dopants are described in Research Disclosure, February 1995, Volume 370, Item 37038, Section XV.B., published by Kenneth Mason Publications, Ltd., Dudley Annex, 12a North Street, Elmsworth, Hampshire PO10 7DQ, England.

The present invention is not limited to any particular fiber or textile fabric or yarn including, exhaustively any natural or manufactured fibers. Examples of natural fibers include, cotton (cellulosic), wool, or other natural hair fibers, for example, mohair and angora. Examples of manufactured fibers include synthetics, such as, polyester, polypropylene, nylon, acrylic, polyamide, or, regenerated materials such as cellulosics. The target fiber or yarn may include any number of chemistries or applications prior to, during and/or after the application of the antimicrobial composition including, for example, antistatic control agents, flame retardants, soil resistant agents, wrinkle resistant agents, shrink resistant agents, dyes and colorants, brightening agents, UV stabilizers, lubricants, antimigrants, and the like.

The following examples are intended to demonstrate, but not to limit, the invention.

### EXAMPLES

### Testing Methodologies

The antimicrobial properties of the fiber or textile fabric treated with the inventive compositions may be evaluated according to the procedures documented in AATCC-100 for the quantitative evaluation of textiles treated with antimicrobial finishes, or the so called New York State Proposal. Durable antimicrobial performance is judged to be acceptable when survival rates according to the procedures outlined in the New York State Proposal are less than 10%, more preferably less than 1% and most preferably less than 0.1 %. This activity must be observed before and after washing cycles in standard domestic operating conditions such as described in the document ISO 6330:2000 for domestic washing and drying procedures for textile testing, or AATCC Test Method 138-2000 for Cleaning and Washing of Textile Floor Coverings.

Testing of antimicrobial activity is based on the contact between the antimicrobial substance and the targeted microorganisms followed by the measurement of the impact on the microorganism's viability or growth rate. In the case of surfaces, surface treatment or coatings integrating antimicrobials, the activity is relying on the diffusion of the antimicrobial from the surface to the environment in which microorganisms are present. Alternatively the activity can also be based on the contact of the microorganism with the surface, with no or very low release of the antimicrobial substance.

The quantitative method used to measure antimicrobial diffusing from a surface was the dipping test. Operating conditions can be very different according to the targeted application. Some are normalized in standard methods, for instance: AATCC-100 for the quantitative evaluation of textiles treated with antimicrobial finishes, or the so called New-York State Proposal.

The principle of these methods is to put a piece of material (yarn, textile etc.) with a known surface area in contact with a solution inoculated with microorganisms. The leaching of antimicrobials from the surface into the solution impacts the microorganism growth when the activity is significant. Following the microorganism's number in solution (planktonic) over time allows one to evaluate quantitatively the antimicrobial activity.

The operating conditions were selected in order to fit most of potential applications of the new antimicrobial surface. Samples of fabrics (2 x 2 cm) were aseptically cut and placed in the center of a small petri dish. The dish was then placed into a larger petri dish containing 10 mL sterile HP H20. A 0.1 mL inoculum of *Staphylococcus aureus* (ATCC 6538) was placed on the surface of the fabric. The plates were incubated at 35 ± 2 °C for 24 hours. The plates were then removed and the fabric was aseptically transferred to sterile containers containing 5 mL of 0.2 µm water. The containers were shaken for 1 minute to remove any bacteria and filtered onto Trypticase Soy Agar plates. The plates were incubated at 35 ± 2 °C degrees C for 24 hours and then observed for growth. The lower the number of bacteria, the higher the antimicrobial activity.

### Example 1:

Silver chloride grains were prepared by the following process: to a reactor charged with 184 g of gelatin, 15 g of sodium chloride and 6,490 g of water, 2.8 molar silver nitrate solution and 3 molar sodium chloride solution were added at 186 cc/min and 182 cc/min, respectively, over 16.2 minutes with vigorous stirring. The temperature of the reactor was maintained at 46.1 °C throughout the precipitation process. The solution was then washed with an ultrafiltration column to remove soluble salts. The resulting silver chloride grains had a mean equivalent circular diameter of 0.2 micron.

Five sample compositions used for antimicrobial treatment of fabrics were prepared by mixing various amounts of the following components: (1) Silver Chloride/Gelatin emulsion in water (Silver Index ≈ 1.693 kg/mol Ag, Gelatin Level ≈ 20 g/mol Ag), (2) Acrylic binder dispersion (Rhoplex® TS-934HS), (3) Thickener solution (2% by weight Benecel® M042 in water), (4) Water. The table below shows the approximate percentage by weight of each active component in each of the five compositions.

**Table 1: Percentage of Components**

| **Sample** | **Wt % AgCl** | **Wt% Gelatin** | **Wt% acrylic** Binder | **Wt % Thickener** | **Wt% Water** |
|---|---|---|---|---|---|
| 19--1 | 0.0075 | 0.001 | 0.7 | 0.35 | 98.94 |
| 19-2 | 0.0075 | 0.001 | 0.5 | 0.25 | 99.24 |
| 19-3 | 0.0075 | 0.001 | 0.3 | 0.15 | 99.54 |
| 19-4 | 0.0075 | 0.001 | 0.1 | 0.05 | 99.84 |
| 19-5 | 0.0075 | 0.001 | 0.9 | 0.45 | 98.64 |

About 0.1% by weight of a non-ionic surfactant (Triton® X-100) was added to each of the samples described above. A strip of 100% polyester fabric (100% Dacron Type 54) was immersed for about 5 seconds in each of the samples. The immersed fabric strips were then removed and passed through a nip/roll. The average wet pickup by these fabrics was about 215%. The resulting fabric strips were then heated to 150°C for 10 minutes.

### Description of Laundering Conditions:

The treated fabrics listed above were washed according to the procedure adapted from ISO 6330:2000, in which treated fabrics were laundered multiple times in a standard domestic washing machine. Washings were performed in a warm/cold cycle. Each wash cycle was about 20 minutes. Ultra Tide 2 was used at a concentration of about 5 grams per 20 liters of wash water. After every 8 wash cycles with detergent the fabrics were washed twice without detergent. This was done to minimize the potential buildup of biocidal components found within the detergent.

Fabrics were tested for antimicrobial activity according to the method described above adapted from AATCC 100 and NYS proposal. A control without antimicrobial material was run in the same conditions. The results are listed in Table 2. The control showed a 100% survival score before washing, and along all wash cycles. There is no antimicrobial activity displayed by the control.

Fabrics 19-1 to 19-5 have the same amount of antimicrobial with various binder concentrations. Survival scores before washing are very low : < 0.1 % up to 0.2 %. This shows very good antimicrobial activity. After 10 and 20 washes the survival scores are still very low showing a sustained antimicrobial activity despite washing. After 30 washes the survival scores were still very low for fabrics 19-3 to 19-5. A slight increase of survival is observed for fabrics 19-1 and 19-2, but it is still lower than 1%.

**Table 2: Survival Scores after Washing**

| **Sample** | **0 Wash** | **10 Wash** | **20 wash** | **30 wash** |
|---|---|---|---|---|
| **19**-**Control Detergent** | 100 % | 0.2 % | 100 % | 100 % |
| **19-1** | <0.1 % | 0.1 % | <0.1 % | 0.6 % |
| **19-2** | 0.2 % | 0.1 % | <0.1 % | 0.3 % |
| **19-3** | 0.2 % | 0.2 % | <0.1 % | 0.1 % |
| **19-4** | <0.1 % | <0.1 % | <0.1 % | 0.1 % |
| **19-5** | 0.1 % | <0.1 % | <0.1 % | 0.1 % |

To summarize, the fabrics treated with the antimicrobial material described herein all have very good antimicrobial activity that is sustained after 30 washes with detergent in standard domestic laundry conditions. This is recognized as good and sustainable antimicrobial activity in the textile industry. See for instance the publication of Payne, J.D.& Kudner, D.W, "A new durable antimicrobial finish for cotton textiles." In American Dyestuff Reporter (1996), 85(6), 26-30.

### Example 2:

Two samples used for antimicrobial treatment of fabrics were prepared by mixing various levels of the following components: (1) Silver Chloride/Gelatin emulsion from Example 1 in water (Silver Index ≈ 1.693 kg/mol Ag, Gelatin Level ≈ 20 g/mol Ag), (2) Polyurethane binder dispersion (Witcobondâ W-240), (3) De-ionized water. Table 3 below shows the approximate percentage by weight of each component in each sample mixed to prepare antimicrobial fabric treatments.

**Table 3: Percentage of Components**

| **Sample** | **Wt% AgCl** | **Wt% Gelatin** | **Wt% Polyurethane binder** | **Wt% Water** |
|---|---|---|---|---|
| 17-2 | 0.0075 | 0.001 | 1.0 | 98.99 |
| 17-3 | 0.0075 | 0.001 | 3.0 | 96.99 |

About 0.1% by weight of a non-ionic surfactant (Tritonâ X-100) was added to the samples. A strip of 100% polyester fabric (100% Dacron Type 54) was immersed in each sample for about 5 seconds. The immersed fabric strips were then removed and passed through a nip/roll. The resulting fabric strips were then heated to 150 °C for 10 minutes.

The treated fabrics listed above were washed according to the procedure described above that was adapted from ISO 6330:2000 and test for antimicrobial activity according to the method described above adapted from AATCC 100 and NYS proposal. The survival scores for these samples are as follows in Table 4.:

**Table 4: % Survival scores after washing**

| | 0 Wash | 30 Wash |
|---|---|---|
| 17-2W | <0.1 % | <0.1 % |
| 17-3W | <0.1 % | <0.1 % |

Both treated fabrics showed excellent antimicrobial activity after 30 washes.

### Example 3:

Three sample compositions used for antimicrobial treatment of fabrics were prepared by mixing various levels of the following components: (1) Silver Chloride/Gelatin emulsion from Example 1 in water (Silver Index ≈ 1.693 kg/mol Ag, Gelatin Level ≈ 20 g/mol Ag), (2) Additional gelatin not used in the AgCl precipitation, (3) De-ionized water. Additionally, a solution of aluminum potassium sulfate dodecahydrate (Alum) was added to crosslink the hydrophilic gelatin. Table 5 below shows the approximate percentage by weight of each component in each sample.

**Table 5: Percentage of Components.**

| **Sample** | **Weight % AgCl** | **Weight % gelatin** | **Weight % Alum** | **Wt % Water** |
|---|---|---|---|---|
| Fabric only | 0 | 0 | 0 | 100 |
| 26-1 | 0.0075 | 0.6 | 0.01 | 99.3 |
| 26-2 | 0.0075 | 0.6 | 0.03 | 99.3 |
| 26-3 | 0.0075 | 0.6 | 0.05 | 99.3 |

Just prior to the fabric treatment with the antimicrobial composition the Alum crosslinker was added to each sample. A strip of 100% polyester fabric (100% Dacron Type 54) was immersed in each sample for about 5 seconds. The immersed fabric strips were then removed and passed through a nip/roll. The resulting fabric strips were then heated to 150 °C for 10 minutes.

The treated fabrics listed above were washed according to the procedure described above that was adapted from ISO 6330:2000 and the test for antimicrobial activity according to the method described above adapted from AATCC 100 and NYS proposal. The survival scores for these samples are as follows in Table 6:

**Table 6: Survival scores after Washing**

| | **0 Wash** | **10 Wash** | **20 wash** | **30 wash** |
|---|---|---|---|---|
| **Fabric only** | 100 % | 100 % | 100 % | 100 % |
| **26**-**1A** | 0.1 % | 0.1 % | <0.1 % | 0.6 % |
| **26-2A** | <0.1 % | <0.1 % | <0.1 % | 0.1 % |
| **26-3A** | <0.1 % | <0.1 % | 0.2 % | 0.1 % |

All treated fabrics showed excellent antimicrobial activity after 30 washes.

## Claims

1. Use of a composition comprising silver halide particles, gelatin in an amount of less than 1% by weight and at least 50% water, which composition is substantially free of organic solvents_to impart antimicrobial properties to a textile or fabric.

2. A use as claimed in claim 1, in which the composition further comprises a hydrophobic binder and/or a crosslinker for the gelatin.

3. A use as claimed in claim 1 or claim 2, in which the composition comprises at least 95% water.

4. A use as claimed in any one of the preceding claims, in which the silver halide particles are present in an amount of from 0.0001% to 0.5% by weight.

5. A use as claimed in any one of the preceding claims, wherein the silver halide particles are silver chloride particles.

6. A use as claimed in any one of the preceding claims, wherein the silver halide particles have a mean equivalent circular diameter of less than 1 µm

7. A use as claimed in any one of the preceding claims, wherein the composition further comprises an agent to prevent latent image formation.

8. A method of coating a textile fabric or textile fiber to impart antimicrobial properties thereto, the method comprising providing a composition as defined in anyone of claims 1 and 3 to 6 which comprises a hydrophobic binder, or a crosslinker for the gelatin and coating the composition on the textile fabric or textile_fiber.

9. A method as claimed in claim 8, in which the step of providing the composition comprises providing at least two separately packaged parts, the first part being a composition as defined in any one of claims 1 and 3 to 7; and the second part comprising an aqueous suspension of a hydrophobic binder, or a composition comprising a crosslinker for gelatin; and mixing the two separately packaged parts.

10. A fabric or textile fiber having coated thereon an antimicrobial composition comprising silver chloride particles and gelatin, obtained from a method according to claim 8 or 9.

## Patentansprüche

1. Verwendung einer Zusammensetzung, umfassend Silberhalogenid-Teilchen, Gelatine in einer Menge von weniger als 1 Gew.-% und mindestens 50% Wasser, wobei die Zusammensetzung im Wesentlichen frei von organischen Lösungsmitteln ist, um einem Textil oder Gewebe antimikrobielle Eigenschaften zu verleihen.

2. Verwendung nach Anspruch 1, wobei die Zusammensetzung weiterhin ein hydrophobes Bindemittel und/oder ein Vernetzungsmittel für die Gelatine umfasst.

3. Verwendung nach Anspruch 1 oder Anspruch 2, wobei die Zusammensetzung mindestens 95% Wasser umfasst.

4. Verwendung nach einem der vorstehenden Ansprüche, wobei die Silberhalogenid-Teilchen in einer Menge von 0,0001% bis 0,5 Gew.-% vorliegen.

5. Verwendung nach einem der vorstehenden Ansprüche, wobei die Silberhalogenid-Teilchen Silberchlorid-Teilchen sind.

6. Verwendung nach einem der vorstehenden Ansprüche, wobei die Silberhalogenid-Teilchen einen mittleren Äquivalentkreisdurchmesser von weniger als 1 µm aufweisen.

7. Verwendung nach einem der vorstehenden Ansprüche, wobei die Zusammensetzung weiterhin ein Mittel zum Verhindern von latenter Bilderzeugung umfasst.

8. Verfahren zum Beschichten eines Textil-Gewebes oder einer Textil-Faser, um antimikrobielle Eigenschaften darauf zu verleihen, wobei das Verfahren Bereitstellen einer Zusammensetzung, wie in einem der Ansprüche 1 und 3 bis 6 definiert, die ein hydrophobes Bindemittel oder ein Vernetzungsmittel für die Gelatine umfasst, und Beschichten der Zusammensetzung auf das Textil-Gewebe oder die Textil-Faser umfasst.

9. Verfahren nach Anspruch 8, wobei der Schritt des Bereitstellens der Zusammensetzung Bereitstellen von mindestens zwei gesondert gebündelten Teilen umfasst, wobei der erste Teil eine wie in einem der Ansprüche 1 und 3 bis 7 definierte Zusammensetzung ist; und der zweite Teil eine wässrige Suspension von einem hydrophoben Bindemittel oder eine ein Vernetzungsmittel für die Gelatine umfassende Zusammensetzung umfasst; und Mischen der zwei gesondert gebündelten Teile.

10. Gewebe oder Textil-Faser, die darauf beschichtet eine antimikrobielle nach einem Verfahren nach Anspruch 8 oder 9 erhaltene Zusammensetzung, die Silberchlorid-Teilchen und Gelatine umfasst, aufweist.

## Revendications

1. Utilisation d'une composition comprenant des particules d'halogénure d'argent, de la gélatine en une quantité inférieure à 1 % en poids et au moins 50 % d'eau, laquelle composition est sensiblement dépourvue de solvants organiques afin de conférer des propriétés antimicrobiennes à un textile ou un tissu.

2. Utilisation selon la revendication 1, dans laquelle la composition comprend en outre un liant hydrophobe et/ou un agent de réticulation pour la gélatine.

3. Utilisation selon la revendication 1 ou la revendication 2, dans laquelle la composition comprend au moins 95 % d'eau.

4. Utilisation selon l'une quelconque des revendications précédentes, dans laquelle les particules d'halogénure d'argent sont présentes en une quantité de 0,0001 % à 0,5 % en poids.

5. Utilisation selon l'une quelconque des revendications précédentes, dans laquelle les particules d'halogénure d'argent sont des particules de chlorure d'argent.

6. Utilisation selon l'une quelconque des revendications précédentes, dans laquelle les particules d'halogénure d'argent ont un diamètre circulaire équivalent moyen inférieur à 1 µm.

7. Utilisation selon l'une quelconque des revendications précédentes, dans laquelle la composition comprend en outre un agent de prévention de la formation d'images latentes.

8. Procédé de revêtement d'un tissu textile ou d'une fibre textile pour conférer à celui-ci/celle-ci des propriétés antimicrobiennes, le procédé comprenant la fourniture d'une composition selon l'une quelconque des revendications 1 et 3 à 6, qui comprend un liant hydrophobe ou un agent de réticulation pour la gélatine et le revêtement du tissu textile ou de la fibre textile avec la composition.

9. Procédé selon la revendication 8, dans lequel l'étape de fourniture de la composition comprend la fourniture d'au moins deux parties conditionnées séparément, la première partie étant une composition selon l'une quelconque des revendications 1 et 3 à 7 et la seconde partie comprenant une suspension aqueuse d'un liant hydrophobe, ou une composition comprenant un agent de réticulation pour la gélatine ; et le mélange des deux parties conditionnées séparément.

10. Tissu ou fibre textile revêtue d'une composition antimicrobienne comprenant des particules de chlorure d'argent et de la gélatine, obtenue à partir d'un procédé selon la revendication 8 ou 9.
